# EUROPÄISCHE PATENTSCHRIFT

(11) **EP 2 651 598 B1**
(45) Veröffentlichungstag und Bekanntmachung des Hinweises auf die Patenterteilung: **04.03.2015**
(21) Anmeldenummer: 10795332.5
(22) Anmeldetag: 16.12.2010
(51) Int. Cl.: B23Q 3/06, B25B 1/24

(54) **ZUM EINSPANNEN EINER TURBINENSCHAUFEL EINGERICHTETE EINRICHTUNG UND TURBINENSCHAUFEL**
DEVICE DESIGNED FOR CLAMPING A TURBINE BLADE AND TURBINE BLADE
DISPOSITIF CONÇU POUR ENCASTRER UNE AUBE DE TURBINE ET AUBE DE TURBINE

(43) Veröffentlichungstag der Anmeldung: 23.10.2013
(73) Patentinhaber: Blohm Jung GmbH, 21033 Hamburg (DE)
(72) Erfinder: OPPELT, Peter, 21217 Seevetal (DE); EILERS, Bernd, 21033 Hamburg (DE); DIERKS, Maik, 21493 Grove (DE); TSCHANTRE, Alfred, CH-3097 Liebefeld (CH); MOCK, Elmar, CH-2013 Colombier (CH); COOPER, Gary, CH-2554 Meinisberg 51 (CH)
(74) Vertreter: Stork Bamberger
(86) Internationale Anmeldenummer: PCT/EP2010/069927
(87) Internationale Veröffentlichungsnummer: WO 2012/079637

(56) Entgegenhaltungen:
- DE-A1- 3 439 250
- DE-A1- 19 547 952
- US-A- 3 818 646
- US-B1- 6 438 838

## Beschreibung

Die Erfindung betrifft eine Einrichtung, die zum Einspannen einer Turbinenschaufel eingerichtet ist. Mittels der Einrichtung, die die Turbinenschaufel aufweist und mit dieser eine Einheit bildet, ist die Turbinenschaufel in die Spanneinrichtung einer Bearbeitungsvorrichtung einspannbar bzw. in diese einbringbar.

Aus US 6 438 838 B1 ist eine Einrichtung gemäß Oberbegriff des Anspruchs 1 bekannt. Die bekannte Einspanneinrichtung wird zum Reparieren oder Herstellen einer Turbine verwendet, wobei die Turbinenschaufel mittels eines Kunststoffblockes in ein einen Bestandteil der Einspanneinrichtung bildendes Kassettengehäuse eingesetzt wird und letzteres zum Anschweißen der Turbinenschaufel an die Turbinennabe positioniert wird.

Die Erfindung bezieht sich auch auf eine zugehörige präparierte Turbinenschaufel. Turbinenschaufeln werden aus Metalllegierungen gefertigt. Um die Enden der Turbinenschaufel, die ein mit einigen Toleranzen behafteter Gusskörper ist, mit höchsten Genauigkeitsanforderungen an Oberfläche und Form einer präzisen spanenden Bearbeitung, insbesondere einer Schleifbearbeitung zuzuführen, bestehen besondere Erfordernisse zum Einspannen des Werkstücks.

Es sind Spanneinheiten bekannt, die jeweils durch einen voluminösen Spannblock und eine in diesen eingegossene Turbinenschaufel gebildet sind. Zum Beispiel wird ein Spannblock als metallischer Gießblock gefertigt, wobei als Gießmaterial niedrig schmelzende Metalllegierungen verwendet werden. Dieses Material ist weich und entsprechend anfällig für mechanische Beschädigungen. Infolgedessen ist die mechanische Spannung des Spannblocks nicht ausreichend steif. Besonderer Aufwand besteht darin, den metallischen Gießblock wieder von der Turbinenschaufel zu trennen. Die Gießblöcke müssen mit hohem Energieeintrag zum Erreichen von Schmelzpunkten über 130° C abgelöst werden. Weiterhin ist gemäß DE-A1-34 39 250 ein eine Turbinenschaufel ununantelnder Spannblock aus gefülltem Kunststoff bekannt. Die Turbinenschaufel kann mit dem Kunststoffkörper umspritzt sein. Der Kunststoffkörper ist besonders voluminös und unterliegt als solcher erheblicher Schrumpfung. Auch bedingt das Kunststoffmaterial Steifigkeitseinbußen mit der Folge, dass die gewünschte Einspannung beeinträchtigt ist und Genauigkeitserfordernissen nicht ausreichend zuverlässig entsprochen werden kann.

Demgegenüber liegen der Erfindung die Ziele zugrunde, eine Einspannung für eine zu bearbeitende Turbinenschaufel einzurichten, die derart ist, dass die Steifigkeit der Aufspannung zur präzisen Bearbeitung wesentlich verbessert ist, indem das für Oberflächenabdrücke und -Verformung als Werkstück anfällige Turbinenblatt beim Einspannen zuverlässig von solchen Einflüssen freigehalten wird. Aufwändige Spannhilfsmittel sollen entfallen.

Eine eingangs genannte erfindungsgemäße Einrichtung zeichnet sich dadurch aus, dass die Einrichtung durch eine Spanneinheit gebildet ist, die mindestens zwei einen Spannblock bildende Spannblockteile aufweist, die die Turbinenschaufel mit einem Schaufelblattmantel einfassen, der aus unter Spannkraft zumindest im Wesentlichen maßhaltig bleibender Kunststoffmantelschicht gebildet ist, das Schaufelblatt zumindest im Wesentlichen über seine axiale Länge, es an seinem Profilumfang zumindest im Wesentlichen umschließend, formschlüssig aufnimmt und von dem Schaufelblatt abtrennbar ist, wobei die Kunststoffmantelschicht an konkaver Schaufelblattunterseite und an konvexer Schaufelblattoberseite nach außen freiliegende Patrizenoberflächen aufweist, die jeweils durch ein dreidimensional strukturiertes, ein Relief bildendes Patrizenprofil bestimmt sind, und dass die Spannblockteile jeweils an einer Innenseite eine Matrizenoberfläche aufweisen, die durch ein dreidimensional strukturiertes, ein Relief bildendes Matrizenprofil bestimmt ist, wobei die Patrizenoberflächen und die Matrizenoberflächen als einander zugehörige korrespondierende komplementäre, einen Referenz- und Spanneingriff herstellende Flächen ausgebildet sind. Erfindungsgemäß werden bevorzugt zwei Spannblockteile vorgesehen, die im Folgenden als Spannblockhälften bezeichnet werden und einerseits eine konkave Matrizenoberfläche und andererseits eine konvexe Matrizenoberfläche bilden.

Ziele der Erfindung werden auch dadurch erreicht, dass eine Turbinenschaufel, die ein sich axial erstreckendes Schaufelblatt und optional an dessen Enden angeformte Deckbänder umfasst, als in die genannte Einrichtung einfügbares Teil derart eingerichtet ist, dass das Schaufelblatt zumindest im Wesentlichen über seine axiale Länge mit einem das Schaufelblatt an seinem Profilumfang vollständig oder es im Wesentlichen umschließenden und es in formschlüssigem Sitz aufnehmenden, abtrennbaren Schaufelblattmantel aus Kunststoff umgeben ist, der aus einer unter Spannkraft maßhaltig bleibenden Mantelschicht gebildet ist, wobei die Kunststoffmantelschicht an konkaver Schaufelblattunterseite und an konvexer Schaufelblattoberseite nach außen freiliegende Patrizenoberflächen aufweist, die jeweils durch ein dreidimensional strukturiertes, ein Relief bildendes Patrizenprofil bestimmt sind und die sich vollflächig über den Umfang und die axiale Länge des Schaufelblattmantels erstrecken und zum Referenz- und Spanneingriff in zugehörige komplementäre Matrizenoberflächen von Spannblockhälften der genannten Einrichtung ausgebildet sind.

Die erfindungsgemäße Einrichtung ist durch eine mehrteilige, in die Spanneinrichtung einer Bearbeitungsvorrichtung einspannbare Spanneinheit gebildet. Erfindungsgemäß ist das einzuspannende Schaufelblatt sowohl an seiner konkaven, die Saugseite bildenden Schaufelblattunterseite, als auch an seiner konvexen, die Druckseite bildenden Schaufelblattoberseite jeweils mit einer Patrizenoberfläche ausgebildet, die durch ein dreidimensional strukturiertes, ein Relief bildendes Patrizenprofil bestimmt ist. In Kombination damit ist wesentlich, dass der Schaufelblattmantel als relativ dünne, aus Kunststoff gefertigte Mantelschicht ausgebildet ist, deren Ummantelungsprofil dem Querschnittsprofil des mit der konkaven und konvexen Kontur blattförmigen Schaufelblatts entspricht, mit diesem also formäquivalent ist. Der Schaufelblattmantel wird besonders bevorzugt als eine an das Schaufelblatt angespritzte Ummantelung aus Kunststoff vorgesehen. Unter dem formschlüssigen Sitz ist ein spalt- und spielfreier, gegebenenfalls beim Herstellen nur geringster Kunststoffschrumpfung unterliegender Formsitz zu verstehen, der das Schaufelblatt in jeder Richtung unverschieblich in den Kunststoffmantel einbettet.

Die Ausbildung des Schaufelblattmantels aus Kunststoff ist auch mit dem besonderen Vorteil verbunden, dass der Kunststoffmantel in der gespannten Spanneinheit als Dämpfungsschicht wirkt, die Bearbeitungsschwingungen reduziert. Die profilierte Fläche erstreckt sich im Wesentlichen über die gesamte Axiallänge des Schaufelblatts. Das heißt, dass die Schaufelblattenden allenfalls im Übergangsbereich zu stirnseitigen Köpfen oder Enden, die geformte Deckbänder aufweisen können, von der Patrizenoberfläche frei bleiben. Die Patrizenoberfläche erstreckt sich also durchgängig über das Schaufelblatt mit einem Muster aus durch Höhenunterschiede bestimmten Oberflächenformen. So ist die Patrizenoberfläche durch ein räumliches Flächenmuster gebildet, das nach Art einer Rasterung und/oder Wellenstruktur Erhebungen und Vertiefungen aufweist. Die Matrizenoberflächen der Spannblockhälften sind komplementär zu den Patrizenoberflächen ausgebildet. Als Patrize und Matrize werden Positivformen und Negativformen verstanden, die im Formschluss passgenau spielfrei ineinander passen. Patrize und Matrize sind einander zugehörig und korrespondieren über die gesamte Musterfläche miteinander. Dadurch entstehen über die genannte Axiallänge Referenz- und Spanneingriff herstellende Flächen. Diese fassen in der Spanneinheit nach Art einer Schlüssel/-Schloss-Struktur ineinander. Man erreicht definierte Anschlagflächen und Messpunkte für die Positionierung der als Rohling mit höchster Präzision zu bearbeitenden Turbinenschaufel.

In der erfindungsgemäßen Spanneinheit wird das Schaufelblatt mittels der schichtbildenden Kunststoffummantelung formschlüssig gespannt und in drei Achsrichtungen positioniert. Der Kunststoff bleibt auch nach Herstellung der Ummantelung unter Spannkraft maßhaltig. Aufgrund der formschlüssigen, vorzugsweise vollständigen Umschließung des Schaufelblatts mit dem Schaufelblattmantel aus Kunststoff wird stets nur auf die Kunststoffschicht und an keiner Stelle direkt auf die Schaufelblattoberfläche gespannt. Die große Einspannsteifigkeit hat insbesondere auch den Vorteil, dass beim spanenden Bearbeiten der Enden der Turbinenschaufel große Zerspanleistungen möglich werden. Im Ganzen erreicht man mit der erfindungsgemäßen Einrichtung ein Spannsystem, das einfach herzustellen und zu handhaben ist, kompakt baut, kostengünstig ohne besonderen Energieaufwand zu betreiben ist, kaum einem Verschleiß unterliegt, für hohe Einspannsteifigkeit sorgt und die Turbinenschaufel beim Spannen von schädigenden Einflüssen wie Abdrücken und Verformung freihält. Der dünnschichtige Schaufelblattmantel aus Kunststoff lässt sich als solcher auf einfache Weise mechanisch von dem Schaufelblatt ohne Beschädigung desselben ablösen.

Die beiden Matrizenprofile weisen vorteilhaft dreidimensional strukturierte Ausformungen auf, die im gegenseitigen Eingriff mit korrespondierenden komplementären Ausformungen der zugehörigen Patrizenoberflächen des Schaufelblatts eine eindeutige dreiachsige Positionierung der Turbinenschaufel bewirken.

Die Matrizenoberflächen und entsprechend die Patrizenoberflächen weisen vorteilhaft räumliche Flächenmuster auf, die mit über die Axiallänge zumindest im Wesentlichen durchgängigen Höhenlinien und Tiefenlinien in Form von erhabenen und tiefliegenden Längskanten gestaltet sind. Solche Muster weisen rillen- oder furchenartige Strukturen auf. Besonders vorteilhaft hat sich eine treppenförmige Außenkontur des Schaufelblattmantels erwiesen, wobei die Matrizenprofile und die Patrizenprofile treppenförmige, sich in der axialen Einspannlänge erstreckende Stufen aufweisen. Diese bilden wenigstens über einen Teil des Profilumfangs des Schaufelblatts quer zur Längsachse des Schaufelblatts eine Stufung aus. Eine bevorzugte Gestaltung besteht dabei darin, dass die treppenartigen Stufen im Treppenprofil wenigstens im Wesentlichen rechtwinklig sind. Weiter vorteilhaft sind erste Stufenflächen, die zur Dimension der Schaufelblatttiefe zumindest im Wesentlichen senkrecht gerichtet sind, als parallele Stufenflächen ausgebildet. Insbesondere sind die ersten Stufenflächen durch zu ihnen quer gerichtete zweite Stufenflächen gleich beabstandet.

Man erreicht mit der Erfindung eine besonders optimale Verteilung der Spannkräfte auf die den Schaufelblattmantel bildende Kunststoffschicht. Allgemein ist es besonders vorteilhaft, wenn in Axialrichtung streifenartige parallele erste Flächen ausgebildet sind, die mit Spannflächen der Spannblockteile bzw. mit entsprechenden, an solchen Spannflächen zur Anlage kommenden Kontaktflächen einer Spanneinrichtung parallel sind. Vorteilhaft können erste Stufenflächen wenigstens teilweise mit sich über die axiale Stufenlänge ändernder Stufenbreite ausgebildet sein. Die Patrizen- und Matrizenoberflächen können teilweise oder ganz auch durch räumliche Flächenmuster mit inselartigen Strukturen wie zum Beispiel durch kraterartige Erhebungen und Vertiefungen gebildet sein.

Gemäß einer Ausgestaltung kann eine besondere Richtungsstruktur des räumlichen Flächenmusters dadurch gebildet sein, dass wenigstens eine Matrizenoberfläche mit zugehöriger Patrizenoberfläche wenigstens zungen- oder buchtförmige Ausformung aufweist, die sich axial in Richtung der axialen Einspannlänge erstreckt. Solche Ausformungen oder andere axiale Ausformungen können vorteilhaft eine Stufung in Axialrichtung ausbilden.

Die Matrizenoberfläche können durch wenigstens eine quer zur Längsachse der zugehörigen Spannblockhälfte gerichtete Ausnehmung unterbrochen sein, die im Verhältnis zur Axiallänge der Matrizenoberfläche schmal ausgebildet ist und eine Tasche zur Last und Druckverteilung bildet.

Eine Ausgestaltung der Erfindung besteht darin, dass die Spannblockhälften mit ihren Matrizenoberflächen als Formduplikate von Spritzgussformen ausgebildet sein können, die zum Herstellen des Schaufelblattmantels als an das Schaufelblatt angespritztes dünnschichtiges Kunststoffteil dienen. Auf diese Weise werden die Spannblockteile besonders einfach und kostengünstig hergestellt. Die Formduplikate der Spannblockteile können unter Berücksichtigung und nach Maßgabe eines Schrumpfungsfaktors geformt sein, der gegebenenfalls aufgrund der nur sehr dünnen, im Spritzgussverfahren hergestellten Mantelschicht aus Kunststoff einer lediglich geringfügigen Schrumpfung der gespritzten erhärten Patrizenoberflächen gegenüber den Maßen der Spritzgussformen zur Anpassung der Maße entspricht.

Zur Ausbildung des erfindungsgemäßen Spannsystems ist vorgesehen, dass der Schaufelblattmantel mit wenigen Millimetern nur eine geringe Dicke aufweist. Man erreicht, dass eine, vorteilhaft besonders kleine, Materialschrumpfung des im Spritzgussverfahren hergestellten Schaufelblattmantels konstant und bekannt ist, so dass die genannte Formanpassung der Matrizenoberflächen der Spannblockhälften mit definiertem Maß zuverlässig durchführbar ist.

In besonders bevorzugter Gestaltung ist der Schaufelblattmantel eine an das Schaufelblatt angespritzte Mantelschicht aus thermoplastischem Kunststoff. Eine solche Ummantelung lässt sich einfach mit handelsüblichen Spritzgussmaschinen herstellen, die für die Zwecke der Erfindung vorteilhaft nur mit geringsten Spritzdrücken beaufschlagt werden. Thermoplastische Kunststoffe haben den Vorteil, dass sie genau auf die gewünschten Erfordernisse eingestellt werden können, wobei insbesondere eine auch unter hohem Spanndruck zuverlässig beibehaltene Maßhaltigkeit erreicht wird. Die thermoplastischen Kunststoffe lassen sich zum Gießen der besonders dünnwandigen Kunststoffummantelungen mit fein strukturierten Profilen nutzen. Von Vorteil ist auch, dass der thermoplastische Kunststoff des Schaufelblattmantels nach dem Abtrennen des Mantels technisch einfach und kostengünstig einer Wiederverwendung zugeführt werden kann.

Eine Ausgestaltung der Ummantelung der Turbinenschaufel besteht darin, dass der Schaufelblattmantel mit wenigstens einem Schwächungsbereich insbesondere in Form einer Schwächungs-/Trennungslinie ausgebildet ist, so dass eine Sollbruchstelle zum Aufbrechen und Ablösen des Schaufelblattmantels von dem Schaufelblatt gebildet ist. Solche Sollbruchstellen lassen sich ohne besonderen Aufwand herstellen und handhaben, da der Schaufelblattmantel von vornherein dünn ausgebildet ist. Bestandteile des Patrizenprofils können genutzt werden, um an wenigstens einer Sollbruchstelle eine Aufbrechausformung zur Einleitung von Aufbrechkräften in den Schaufelblattmantel auszubilden.

Auf die genannten und noch andere zweckmäßige und vorteilhafte Ausgestaltungen der Erfindung sind Unteransprüche gerichtet. Jedes Teilmerkmal eines Ausführungsbeispiels ist als Teilmerkmal weiterer, nicht dargestellter Ausgestaltungen zu verstehen. Lediglich besonders zweckmäßige und vorteilhafte Ausbildungsformen und -möglichkeiten der Erfindung werden anhand der folgenden Beschreibung der in der schematischen Zeichnung dargestellten Ausführungsbeispiele näher beschrieben.

Es zeigen
- Fig. 1A bis 1C: in Draufsicht sowie in Profilansichten gemäß Schnitten eine erfindungsgemäße Spanneinheit,
- Fig. 2A bis 2D: in axonometrischer sowie in Schnittansichten die erfindungsgemäße Spanneinheit der Fig. 1 in einer Spanneinrichtung einer Bearbeitungsvorrichtung,
- Fig. 3A bis 3E: in axonometrischer Ansicht sowie in Schnittansichten eine konkave Spannblockhälfte der Spanneinheit der Einrichtung gemäß Fig. 1 und 2 und
- Fig. 4A bis 4E: in axonometrischer Ansicht sowie in Schnittansichten eine konvexe Spannblockhälfte der Spanneinheit der Einrichtung gemäß Fig. 1 und 2.

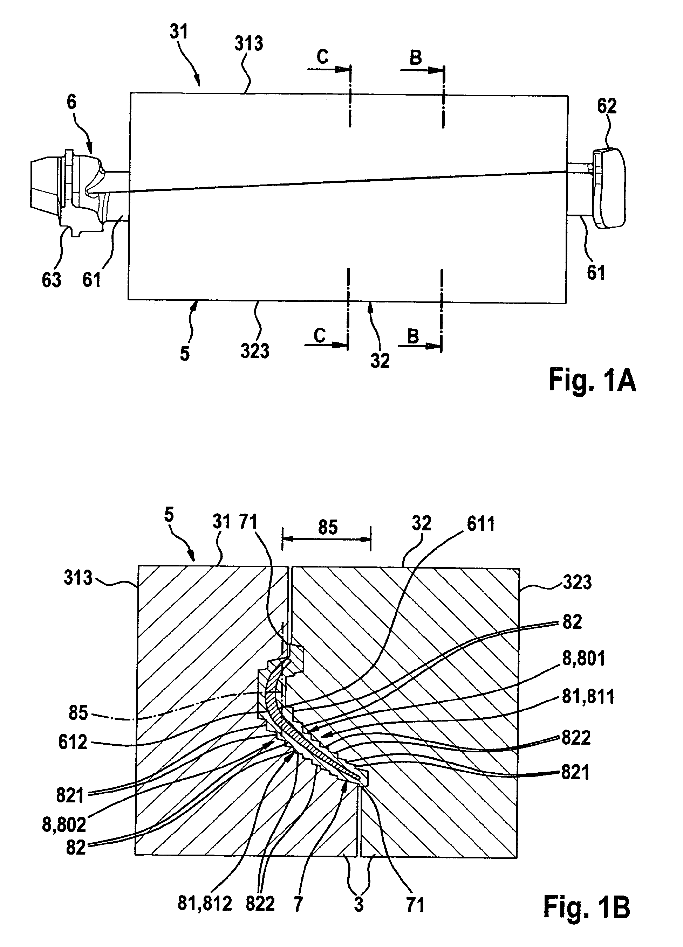

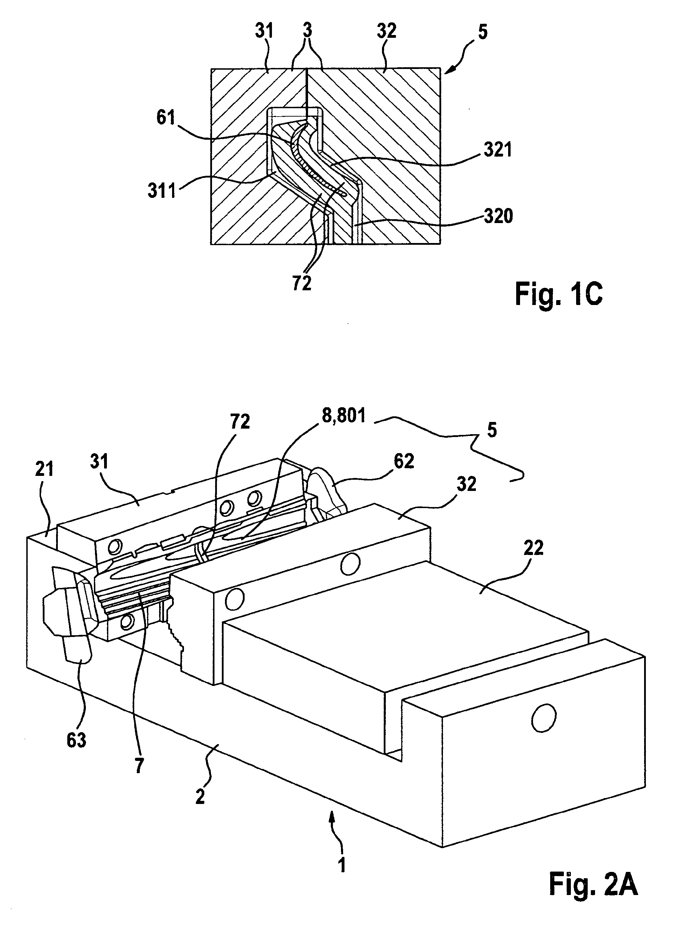

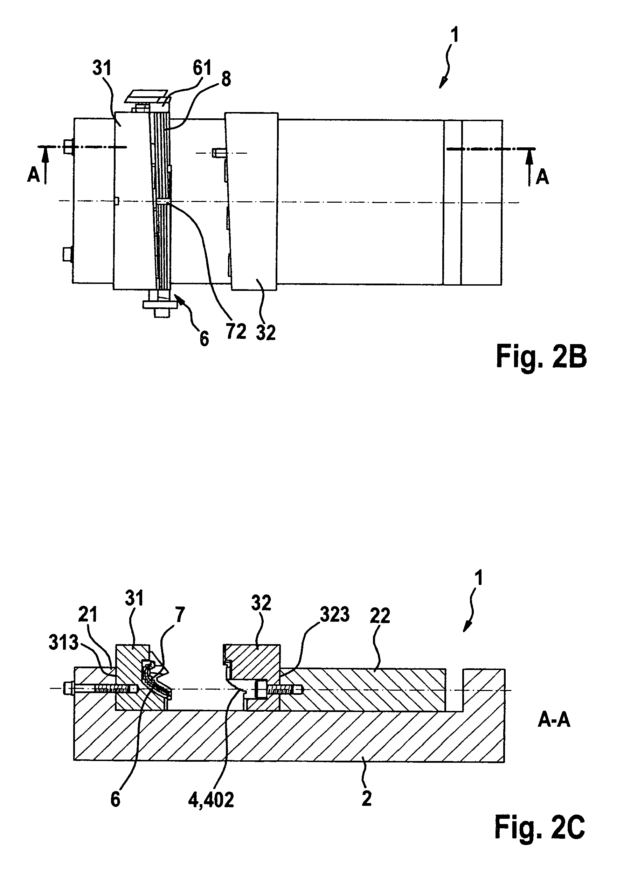

Aus Fig. 1A bis C ist eine erfindungsgemäße Spanneinheit 5 ersichtlich, die eine Einrichtung zum Einbringen einer als Rohling zu bearbeitenden Turbinenschaufel 6 in eine Bearbeitungsvorrichtung bildet. Eine Spanneinrichtung 1 einer solchen ansonsten nicht dargestellten Bearbeitungsvorrichtung ist aus Fig. 2A bis 2C ersichtlich.

Die Spanneinheit 5 umfasst zwei einen Spannblock 3 bildende Spannblockhälften 31, 32 sowie die zwischen diesen aufgenommene Turbinenschaufel 6. Diese weist ein sich axial lang erstreckendes Schaufelblatt 61 und an dessen Enden angeformte Deckbänder 62, 63 auf. Die Turbinenschaufel 6 ist ein zu bearbeitendes Werkstück mit freiliegender Außenkontur. Im Ausführungsbeispiel ist die Turbinenschaufel 6 eine Laufschaufel einer Flugzeugturbine, die aus einem höchst belastbaren Werkstoff, nämlich einer speziellen Metalllegierung geformt wird. Die Turbinenschaufel 6 ist ein einstückiges Formteil, das zu seiner Fertigstellung einer besonders präzisen Schleifbearbeitung der stirnseitigen Enden, in diesem Fall nämlich der Deckenbänder 62, 63 bedarf. Diese müssen mittels einer Schleifmaschine (Bearbeitungsvorrichtung) mit höchster Genauigkeit geschliffen werden, wobei während des Schleifvorgangs gegebenenfalls hoher Schleifdruck auf das Werkstück ausgeübt wird. Die Toleranzen der Turbinenschaufel lassen eine unmittelbare vollflächige Einspannung nicht zu. Mittels der erfindungsgemäßen Spanneinheit 5 wird erreicht, dass die Turbinenschaufel 6 von sie schädigenden Spannkräften freigehalten wird, wobei das Schaufelblatt in der es mittelbar aufnehmenden Spanneinheit 5 dennoch formschlüssig umfasst wird und dadurch in einen höchste Spannsteifigkeit gewährleistenden Verbund integriert ist.

Wie man in Fig. 1A bis C erkennt, ist das Schaufelblatt 61 über seine axiale Länge mit einem eine einstückige Ummantelung bildenden Schaufelblattmantel 7 umgeben, der durch eine dünne Kunststoffmantelschicht gebildet ist. Der Schaufelblattmantel 7 erstreckt sich über die gesamte Länge des Schaufelblatts 61 mit Ausnahme von im Vergleich zur Schaufelblattlänge kurzen Bereichen an den Enden des Schaufelblatts 61. Die dünne Kunststoffmantelschicht wird im Spritzgussverfahren an das Schaufelblatt 61 angespritzt. Ein solcher Spritzguss kann mittels handelsüblicher Spritzgussmaschinen hergestellt werden. Es ist ein Beispiel offenbart, bei dem der Schaufelblattmantel 7 das Schaufelblatt 61 an seinem Profilumfang vollständig umschließt; der Schaufelblattmantel 7 ist durch ein über seinen Umfang geschlossenes Teil gebildet, in dem sich das Schaufelblatt 61 formschlüssig in festem sattem Sitz befindet. Im Profilquerschnitt ist der Schaufelblattmantel 7 mit entsprechend der Kontur des Schaufelblattes 61 konvexer und konkaver Wölbung blattförmig.

Allgemein bestehen erfindungsgemäß Besonderheiten des dünnschichtigen Schaufelblattmantels 7 insbesondere in spezieller Strukturausbildung seiner nach außen freiliegenden Manteloberfläche.

An konkaver Schaufelblattunterseite 611 weist der Schaufelblattmantel 7 eine durch die Schichtbildung dünne, d.h. nur eine geringe Schichtdicke aufweisende Wandung auf, in die eine nach außen freie, dreidimensionale Strukturfläche, nämlich eine im Folgenden als Patrizenoberfläche 801 bezeichnete Strukturfläche geformt ist. In gleicher Weise ist an konvexer Schaufelblattoberseite 612 eine Patrizenoberfläche 802 in dem gleichermaßen dünnschichtigen Schaufelblattmantel 7 ausgebildet. Die beiden Patrizenoberflächen 8 sind jeweils vollflächig durch dreidimensional strukturierte, jeweils ein Relief bildende Patrizenprofile 81 bestimmt, nämlich einerseits auf der konkav gewölbten Seite durch ein Patrizenprofil 811 und auf der konvex gewölbten Seite durch ein Patrizenprofil 812. Sie erstrecken sich über den gesamten Umfang und die axiale Länge des Schaufelblattmantels 7. Die beiden Patrizenprofile 81 weisen im Ausführungsbeispiel treppenformige, sich in axialer Einspannlänge erstreckende Stufen 82 auf.

Wie aus Fig. 2A bis 2D ersichtlich, weisen die Spannblockhälften 31, 32 des Spannblocks 3 jeweils an ihrer dem Schaufelblatt 61 zugewandten Innenseite eine strukturierte Oberfläche auf, die gleichfalls ein räumliches Flächenmuster bildet. Dadurch sind Matrizenoberflächen 4 ausgebildet, die jeweils durch ein dreidimensional strukturiertes, ein Relief bildendes Matrizenprofil 41 bestimmt sind, nämlich an der konkaven Schaufelblattunterseite 611 die Matrizenoberfläche 401 mit dem Matrizenprofil 411 und an der konvexen Schaufelblattoberseite 612 die Matrizenoberfläche 402 mit dem Matrizenprofil 412. Die Patrizenoberflächen 8 und die Matrizenoberflächen 4 gehören jeweils an der Schaufelblattunterseite 611 und der Schaufelblattoberseite 612 paarweise zusammen. Möglich ist es auch, dass wenigstens eine der Spannblockhälften in mehrere Spannblockteile unterteilt ist. Das heißt, dass wenigstens zwei Spannblockteile vorgesehen sein können, die eine entsprechend unterteilte Matrizenoberfläche an konvexer und/oder konkaver Seite des Schaufelblatts 61 bilden.

In der Spanneinheit 5 mit aneinandergefügten Teilen fassen die Patrizenoberflächen 8 formschlüssig in die Matrizenoberflächen 4 derart ein, dass im Spannzustand ein vollflächiger, die Spannposition präzise festlegender Referenzeingriff und ein vollflächiger Spanneingriff hergestellt sind. Bei den Patrizenoberflächen 8 und den Matrizenoberflächen 4 handelt es sich um einander zugehörige korrespondierende Eingriffsflächen, die mit entsprechenden Dimensionen komplementär sind, also einerseits ein Positivteil und andererseits ein zugehöriges exakt passendes Negativteil bilden.

In Fig. 2A bis 2D ist die Spanneinrichtung 1 zum Aufnehmen bzw. Einspannen der Turbinenschaufel in die Bearbeitungsvorrichtung in einfacher Ausführung mit einem Grundkörper 2, einer stationären Spannbacke 21 sowie einer beweglichen Spannbacke 22 dargestellt. Die Spannblockhälfte 31 ist fest und positionsgenau zum Beispiel mittels Schraubverbindung mit der Spannbacke 21 verbunden. Gleichermaßen ist die andere Spannblockhälfte 32 mit der beweglichen Spannbacke 22 verbunden. Gemäß Fig. 2A bis 2C ist die Spanneinrichtung 1 als geöffnete Spanneinheit 5 ersichtlich, die mit ihren sämtlichen Teilen, nämlich den Spannblockhälften 31, 32 und der Turbinenschaufel 6 mit dem Schaufelblattmantel 7 dargestellt ist. Eine Spanneinrichtung 1, wie sie in Fig. 2A bis 2C nur beispielhaft dargestellt ist, kann Bestandteil jeder an sich bekannten Bearbeitungsmaschine sein, die mit Span abhebenden Werkzeugen zur Bearbeitung der an der Spanneinheit 5 freien Enden der Turbinenschaufel 6 eingerichtet ist.

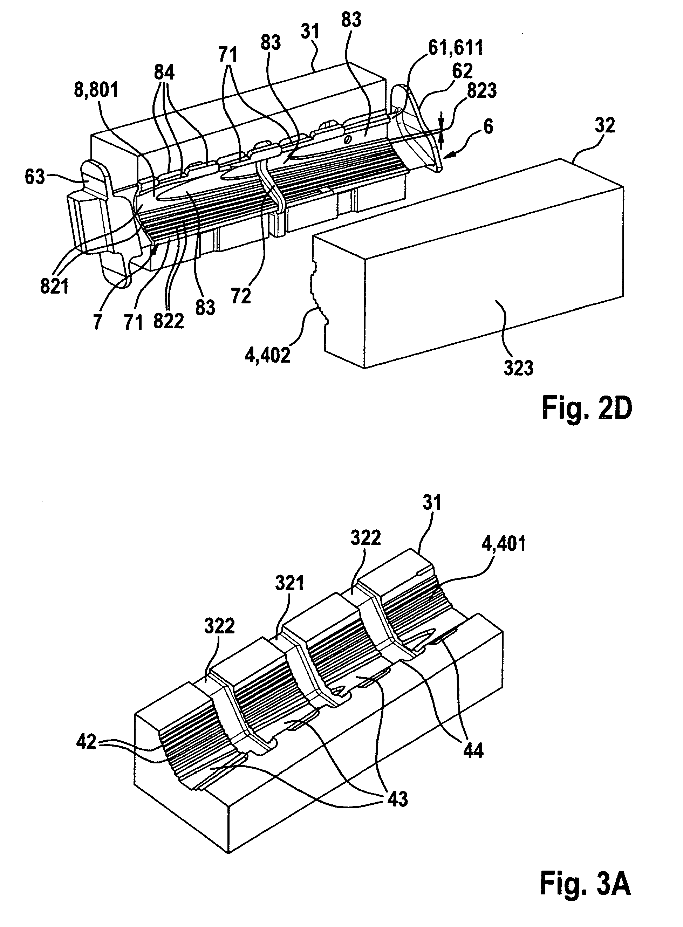

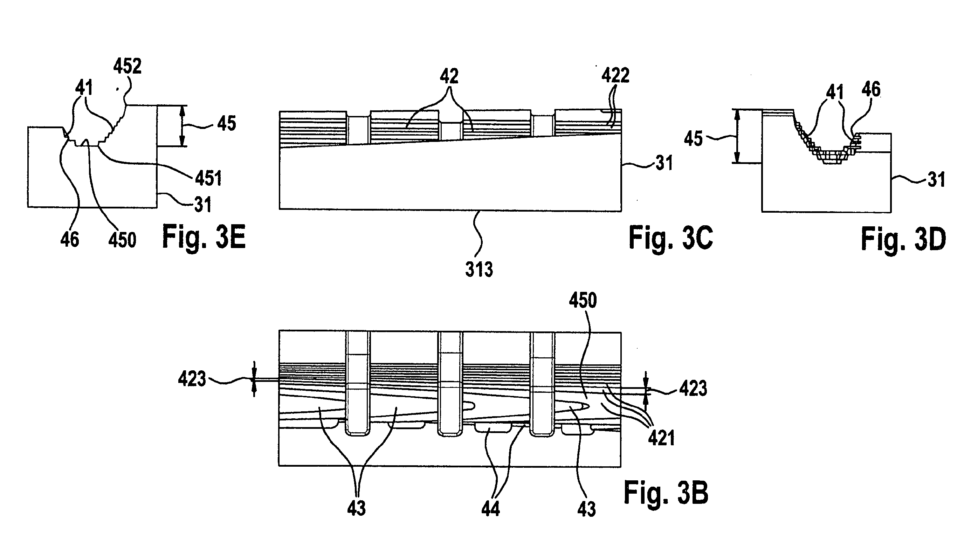

Im Folgenden wird die Struktur der Matrizenoberfläche 401 der Spannblockhälfte 31 anhand der Fig. 3A bis 3E näher beschrieben.

Die Matrizenoberfläche 401 der Spannblockhälfte 31 bildet im Profilquerschnitt eine konkave Einfassung, die mit der konvexen Schaufelblattoberseite 612 korrespondiert. Das Matrizenprofil 41 gemäß Fig. 3A bis 3E weist treppenförmige, sich in der axialen Einspannlänge erstreckenden Stufen 42 auf. Wie insbesondere aus Fig. 3E und 3D ersichtlich, sind die Stufen 42 im Treppenprofil rechtwinklig. Erste Stufenflächen 421, die parallel liegen, sind zu einer Dimension 45, die der Tiefendimension 85 der Schaufelblatttiefe entspricht (Fig. 1B), senkrecht gerichtet. Die Tiefendimension 45 wird als die gesamte Treppenhöhe zwischen tiefgelegener Treppenunterkante 451 und hochgelegener Treppenoberkante 452 definiert. Eine Bodenfläche 450 an der tiefgelegenen Treppenunterkante 451 entspricht einer Sekantenfläche 850, die im konkaven Bereich an den einen Längsrand des Schaufelblatts 61 angrenzt, wie dies in Fig. 1B zu sehen ist. Zwischen den ersten Stufenflächen 421 erstrecken sich zweite Stufenflächen 422 mit gleicher Stufenhöhe. Die parallelen ersten Stufenflächen 421 sind mit Spannkraft einleitenden Spannflächen 313, 323 der Spannblockhälften 31, 32 parallel (insbesondere Fig. 1B, 2A-2D).

Wie insbesondere aus Fig. 3B ersichtlich, weisen die ersten Stufenflächen 421 sich über die axiale Stufenlänge ändernde Stufenbreiten 423 auf. Wie aus Fig. 3A bis 3E ersichtlich, sind die Stufenflächen 421 über den größten Teil der Treppenhöhe schmal ausgebildet, wobei im unteren, an die Treppenbodenfläche 450 anschließenden Treppenhöhenbereich größere Stufenbreiten ausgebildet sind, nämlich von Stufen, die jeweils eine zungen- oder buchtförmige Ausformung 43 aufweisen. Im Ausführungsbeispiel sind drei derartige Längsausformungen gebildet. Diese sind axial versetzt, so dass in diesem Bereich eine Stufung auch in Axialrichtung ausgebildet ist. Diese axiale Stufung liegt zwischen der zuvor beschriebenen Umfangsstufung und einer dieser gegenüberliegenden niedrigeren Umfangsstufung 46, die gleichermaßen mit zu den Spannflächen 313, 323 parallelen Stufenflächen ausgebildet ist.

Wie aus Fig. 3A und 3B ersichtlich, sind im tiefliegenden, das heißt unteren Bereich der Spannblockhälfte 31 noch Ausformungen 44 in Form von über die Einspannlänge wechselweise angeordneten Vor- und Rücksprüngen ausgebildet.

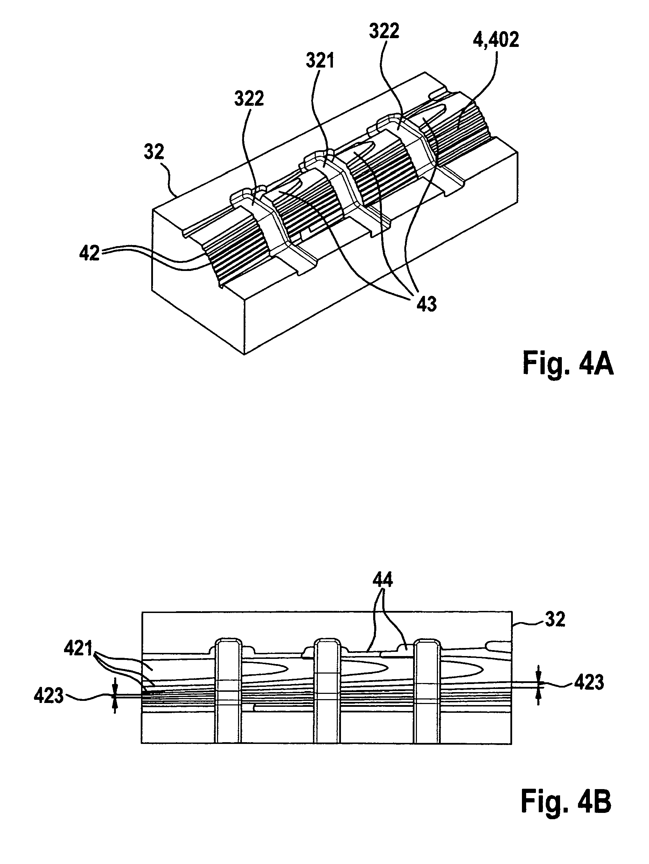

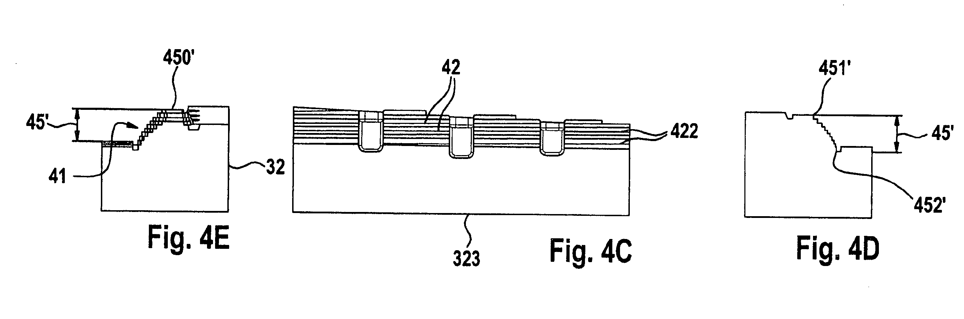

Anhand der Fig. 4A bis 4E ist die andere Spannblockhälfte 32 der Spanneinheit 5 dargestellt. Diese Spannblockhälfte 32 weist im Profil ein über eine Treppenhöhe 45' konvexe Formung auf, die der konkaven Schaufelblattunterseite 611 entspricht und zum Eingriff in diese Unterseite ausgebildet ist. Die Matrizenoberfläche 402 ist entsprechend wie die Matrizenoberfläche 401 der ersten Spannblockhälfte 31 gestaltet. Die Entsprechung besteht darin, dass die Stufen 42 und die Stufenflächen 421, 422 so wie bei der Spannblockhälfte 31 ausgebildet sind, mit dem Unterschied, dass anstelle der Innenwölbung der Spannblockhälfte 31 nun eine Außenwölbung der Spannblockhälfe 32 gebildet ist. Entsprechend ist eine hochgelegene Stufenfläche 450' vorhanden, die in der Spanneinheit 5 der Bodenfläche 450 der Spannblockhälfte 31 an der Mantelfläche gegenüberliegt. Die Treppenhöhe 45' ist durch die Höhe der Treppe zwischen an der Stufenfläche 450' hochgelegener Treppenoberkante 451' und tiefgelegener Treppenunterkante 452' bestimmt. Die Treppenhöhe 45' entspricht der Tiefendimension 85 des Schaufelblatts 61.

Wie aus Fig. 4A bis 4E ersichtlich, liegen die Stufen 42 mit zungen- oder buchtförmigen Ausformungen 43 an der vorstehend definierten hochgelegenen Oberseite der Spannblockhälfte 32. An die zungen- oder buchtförmigen Stufen schließen sich die Stufen 42 mit den schmalen, sich in den Stufenbreiten ändernden Stufenflächen an, die den größten Teil der gesamten Treppenhöhe ausmachen. Die Stufen sind mit den ersten parallelen Stufenflächen 421 sich ändernder Stufenbreite 423 und den zweiten Stufenflächen 422 gleicher Breiten entsprechend wie die gleich bezeichneten Stufenflächen und Stufenbreiten der ersten Spannblockhälfte 31 ausgebildet.

Die Patrizenoberflächen 8 und die Matrizenoberflächen 4 sind, wie oben beschrieben, übereinstimmend mit positiven bzw. negativen räumlichen Flächenmustern ausgebildet. Daher trifft die Beschreibung der Strukturen der Matrizenoberflächen 4 gleichermaßen für die Strukturen der gleichen und komplementären Patrizenoberflächen 8 zu. Die Patrizenoberflächen 8 umfassen also entsprechend auch, wie anhand der Fig. 1B und 2D dargestellt, erste parallele Stufenflächen 821 mit veränderlicher Stufenbreite 823, zweite Stufenflächen 822 zum Ausbilden gleicher Stufenhöhen, Zungen 83, Ausformungen 84 und eine niedrige Stufung 86 auf.

Die in Fig. 3A bis 3E und Fig. 4A bis 4E mit ihren Matrizenoberflächen 4 dargestellten Spannblockhälften 31, 32 können als Formduplikate von nicht dargestellten Spritzgussformen einer nicht dargestellten, an sich bekannten Spritzgussmaschine gefertigt sein, mittels derer der Schaufelblattmantel 7 an das Schaufelblatt 61 der Turbinenschaufel 6 als dünne Schicht angespritzt wird.

Wie aus Fig. 1C, 2A und 2D ersichtlich, weist der Schaufelblattmantel 7 in seiner Längsmitte an konkaver Seite und an konvexer Seite den wulstartigen, an dem Schaufelblatt 61 umlaufenden Steg 72 auf. Dieser Steg 72 ist fertigungstechnisch durch die Herstellung des Schaufelblattmantels 7 im Spritzgussverfahren zwischen zwei Spritzgussformen einer Spritzgussmaschine bedingt. Der Steg 72 entsteht durch in Einspritzkanälen an beiden Schaufelblattseiten 611, 612 erhärtetes Kunststoffmaterial. Entsprechend sind in den Spannblockhälften 31, 32 jeweils in der Längsmittel Ausnehmungen 320, 321 in Form von Nuten eingearbeitet, die den Steg 72 und einen Fortsatz frei lassend aufnehmen.

Die Spannblockhälften 31, 32 sind auch mit quer zu ihrer Axiallänge gerichteten Ausnehmungen 322 ausgestattet, die zu der Ausnehmung 321 gleich beabstandet sind. Gleiche Längsabstände sind so gewählt, dass die Ausnehmungen 321, 322 die Matrizenoberflächen 4 unterbrechen und Oberflächenabschnitte von zumindest im Wesentlichen gleicher axialer Länge bilden. Sämtliche Ausnehmungen bilden taschenartige Räume, die gegebenenfalls in der gespannten Spanneinheit 5 die Last und Druckverteilung begünstigen, wobei auch eine ungleiche Beabstandung gewählt werden kann. Die Ausnehmungen können zudem genutzt werden, um bei der Spritzgussherstellung des Schaufelblattmantels 7 gegebenenfalls entstehende Fertigungstoleranzen in der axialen Länge des Schaufelblattmantels 7 auszugleichen. Die Ausnehmungen 321, 322 bleiben so schmal, dass der über den Umfang des Schaufelblattmantels 7 geschlossene Referenz- und Spanneingriff nicht beeinträchtigt wird. Auch in axialer Längsrichtung des Schaufelblattmantels 7 bleibt es bei einem Referenz- und Spanneingriff, der mit den räumlichen Flächenmustern großflächig und in diesem Sinne vollflächig bleibt.

Im Ausführungsbeispiel ist der Schaufelblattmantel 7 längs der beiden Schaufelblattkanten mit Schwächungslinien ausgebildet, die Sollbruchstellen 71 zum Aufbrechen und Ablösen des Schaufelblattmantels 7 von dem Schaufelblatt 6 bilden. Längs der einen Schwächungslinie sind Aufbrech-Ausformungen 84 ausgebildet, die Bestandteil des Patrizenprofils 81 sind und den komplementären Vorsprüngen und Rücksprüngen 44 in den Matrizenprofilen 41 entsprechen.

## Patentansprüche

1. Zum Einspannen einer Turbinenschaufel (6) eingerichtete Einrichtung, wobei die Einrichtung durch eine Spanneinheit (5) gebildet ist, die mindestens zwei einen Spannblock (3) bildende Spannblockteile (31, 32) aufweist, die die Turbinenschaufel (6) mit einem Schaufelblattmantel (7) einfassen, der aus unter Spannkraft zumindest im Wesentlichen maßhaltig bleibender Kunststoffmantelschicht gebildet ist, das Schaufelblatt (61) zumindest im Wesentlichen über seine axiale Länge, es an seinem Profilumfang zumindest im Wesentlichen umschließend, in formschlüssigem Sitz aufnimmt und von dem Schaufelblatt (61) abtrennbar ist, wobei die Kunststoffmantelschicht an konkaver Schaufelblattunterseite (611) und an konvexer Schaufelblattoberseite (612) nach außen freiliegende Oberflächen aufweist, **dadurch gekennzeichnet, dass** die nach außen freiliegenden Oberflächen Patrizenoberflächen (8) sind, die jeweils durch ein dreidimensional strukturiertes, ein Relief bildendes Patrizenprofil (81) bestimmt sind, und dass die Spannblockteile (31, 32) jeweils an einer Innenseite eine Matrizenoberfläche (4) aufweisen, die durch ein dreidimensional strukturiertes, ein Relief bildendes Matrizenprofil (41) bestimmt ist, wobei die Patrizenoberflächen (8) und die Matrizenoberflächen (4) als einander zugehörige korrespondierende komplementäre, einen Referenz- und Spanneingriff herstellende Flächen ausgebildet sind.

2. Einrichtung nach Anspruch 1, **dadurch gekennzeichnet, dass** beide Matrizenprofile (41) dreidimensional strukturierte Ausformungen aufweisen, die im gegenseitigen Eingriff mit korrespondierenden komplementären Ausformungen der zugehörigen Patrizenoberflächen (8) des Schaufelblatts (61) eine eindeutige dreiachsige Positionierung der Turbinenschaufel (6) bewirken.

3. Einrichtung nach Anspruch 1 oder 2, **dadurch gekennzeichnet, dass** die Matrizenprofile (41) und die Patrizenprofile (81) treppenförmige, sich in der axialen Einspannlänge erstreckende Stufen (42, 82) aufweisen.

4. Einrichtung nach Anspruch 3, **dadurch gekennzeichnet, dass** erste Stufenflächen (421, 821), die zur Dimension (85) der Schaufelblatttiefe zumindest im Wesentlichen senkrecht gerichtet sind, als parallele Stufenflächen ausgebildet sind.

5. Einrichtung nach Anspruch 3 oder 4, **dadurch gekennzeichnet, dass** die ersten Stufenflächen (421, 821) wenigstens teilweise mit sich über die axiale Stufenlänge ändernder Stufenbreite (423, 823) ausgebildet sind.

6. Einrichtung nach einem der Ansprüche 1 bis 5, **dadurch gekennzeichnet, dass** wenigstens eine der Matrizenoberflächen (4) mit zugehöriger Patrizenoberfläche (8) Ausformungen aufweist, die sich axial in Richtung der axialen Einspannlänge erstrecken und in der Einspannlänge eine Stufung ausbilden.

7. Einrichtung nach einem der Ansprüche 1 bis 6, **dadurch gekennzeichnet, dass** die Matrizenoberflächen (4) durch wenigstens eine quer zur Längsachse der zugehörigen Spannblockteile (31, 32) gerichtete Ausnehmung (311, 312, 321, 322) unterbrochen ist, die im Verhältnis zur Axiallänge der Matrizenoberfläche (4) schmal ausgebildet ist und eine Tasche zur Last und Druckverteilung bildet.

8. Einrichtung nach einem der Ansprüche 1 bis 7, **dadurch gekennzeichnet, dass** die Spannblockteile (31, 32) mit ihren Matrizenoberflächen (4) als Formduplikate von Spritzgussformen ausgebildet sind, die zum Herstellen des Schaufelblattmantels (7) als an das Schaufelblatt (61) angespritztes Kunststoffteil dienen.

9. Einrichtung nach Anspruch 8, **dadurch gekennzeichnet, dass** die Matrizenoberflächen (4) der Formduplikate nach Maßgabe eines Schrumpfungsfaktors der gespritzten erhärteten Patrizenoberflächen (8) gegenüber den Maßen der Spritzgussformen mit entsprechend der Schrumpfung angepassten Maßen ausgebildet sind.

10. Turbinenschaufel (6), die als in eine Einrichtung (1) nach einem der Ansprüche 1 bis 9 einfügbares Teil eingerichtet ist, wobei das Schaufelblatt (61) zumindest im Wesentlichen über seine axiale Länge mit einer das Schaufelblatt (61) an seinem Profilumfang umschließenden und es in formschlüssigem Sitz aufnehmenden, abtrennbaren Schaufelblattmantel (7) umgeben ist, der durch eine unter Spannkraft maßhaltig bleibende Mantelschicht aus Kunststoff gebildet ist, wobei die Mantelschicht an konkaver Schaufelblattunterseite (611) und an konvexer Schaufelblattoberseite (612) nach außen freiliegende Patrizenoberflächen (8) aufweist, die jeweils durch ein dreidimensional strukturiertes, ein Relief bildendes Patrizenprofil (81) bestimmt sind und die sich vollflächig über den Umfang und die axiale Länge des Schaufelblattmantels (7) erstrecken und zum Referenz- und Spanneingriff in zugehörige komplementäre Matrizenoberflächen (4) von Spannblockteile (31, 32) der genannten Einrichtung (1) ausgebildet sind.

11. Turbinenschaufel nach Anspruch 10, **dadurch gekennzeichnet, dass** der Schaufelblattmantel (7) eine an das Schaufelblatt (61) angespritzte Ummantelung aus thermoplastischem Kunststoff ist.

12. Turbinenschaufel nach Anspruch 10 oder 11, **dadurch gekennzeichnet, dass** der Schaufelblattmantel (7) mit wenigstens einem Schwächungsbereich ausgebildet ist, der eine Sollbruchstelle (71) zum Aufbrechen und Ablösen des Schaufelblattmantels (7) von dem Schaufelblatt (61) bildet.

13. Turbinenschaufel nach einem der Ansprüche 10 bis 12, **dadurch gekennzeichnet, dass** das Patrizenprofil (81) an wenigstens einer Seite des Schaufelblatts (6) Ausformungen aufweist, die sich axial in Richtung der axialen Einspannlänge erstrecken und in der Einspannlänge eine Stufung ausbilden.

## Claims

1. A device designed for clamping a turbine vane (6), wherein the device is formed by a clamping unit (5) having at least two clamping block parts (31, 32) forming a clamping block (3) that enclose the turbine vane (6) with a turbine blade shell (7) formed from a plastic shell layer that remains at least substantially dimensionally stable under clamping force, that at least substantially accommodates the turbine blade (61) over its axial length and at least substantially surrounds it in a positive-fitting seat at its profile contour and can be separated from the turbine blade (61), wherein on the concave underside (611) of the turbine blade and convex upper side (612) of the turbine blade, the plastic shell layer has outwardly exposed surfaces, **characterized in that** the outwardly exposed surfaces are patrix surfaces (8) that are respectively defined by a three-dimensionally structured patrix profile (81) forming a relief, and **in that** the clamping block parts (31, 32) each have a matrix surface (4) on an inside which is defined by a three-dimensionally structured matrix profile (41) forming a relief, wherein the patrix surfaces (8) and matrix surfaces (4) are formed as associated complementary surfaces that correspond to one another and create a reference and clamping engagement.

2. Device according to claim 1, **characterized in that** both matrix profiles (41) have three-dimensionally structured shapes that yield a distinct, three-axis position of the turbine vane (6) in mutual engagement with corresponding, complementary shapes in the associated patrix surfaces (8) of the turbine blade (61).

3. Device according to claim 1 or 2, **characterized in that** the matrix profiles (41) and patrix profiles (81) have stair-shaped steps (42, 82) extending in the axial length of clamping.

4. Device according to claim 3, **characterized in that** first step surfaces (421, 821) that are aligned substantially perpendicular to the dimension (85) of the turbine blade depth are designed as parallel step surfaces.

5. Device according to claim 3 or 4, **characterized in that** the first step surfaces (421, 821) are designed at least partially with a step width (423, 823) that changes over the axial step length.

6. Device according to any one of claims 1 to 5, **characterized in that** at least one of the matrix surfaces (4) with an associated patrix surface (8) has shapes that extend axially in the direction of the axial length of clamping and form a stepping in the length of clamping.

7. Device according to any one of claims 1 to 6, **characterized in that** the matrix surfaces (4) are interrupted by at least one recess (311, 312, 321, 322) that is aligned transverse to the longitudinal axis of the associated clamping block parts (31, 32) and is designed narrow in comparison to the axial length of the matrix surface (4) and forms a pocket for distributing load and pressure.

8. Device according to any one of claims 1 to 7, **characterized in that** the clamping block parts (31,32) with their matrix surfaces (4) are formed as mould duplicates of injection moulds that serve for manufacturing the turbine blade shell (7) as a plastic part injection-moulded onto the turbine blade (61).

9. Device according to claim 8, **characterized in that** the matrix surfaces (4) of the mould duplicates are designed incorporating a shrinkage factor of the injection-moulded, hardened patrix surfaces (8) relative to the dimensions of the injection moulds with dimensions adapted to correspond to the shrinkage.

10. A turbine vane (6), that is designed as a part insertable into a device (1) according to any one of claims 1 to 9, wherein the turbine blade (61) is surrounded by a removable turbine blade shell (7) that encloses the turbine blade (61) at its contour profile at least substantially over its axial length and accommodates it in a positive-fitting seat, and is formed from a shell layer that is made of plastic and remains dimensionally stable under clamping force, wherein the shell layer has outwardly exposed patrix surfaces (8) on a concave underside (611) of the turbine blade and convex upper side (612) of the turbine blade, the surfaces (8) are each defined by a three-dimensionally structured patrix profile (81) forming a relief, extend over the entire peripheral surface and axial length of the turbine blade shell (7), and are designed for a reference and clamping engagement in associated complementary matrix surfaces (4) of clamping block parts (31, 32) of said device (1).

11. Turbine vane according to claim 10, **characterized in that** the turbine blade shell (7) is a jacket consisting of a thermoplastic plastic that is injection-moulded onto the turbine blade (61).

12. Turbine vane according to claim 10 or 11, **characterized in that** the turbine blade shell (7) is designed with at least one weak region that forms a predetermined breaking point (71) for breaking open and removing the turbine blade shell (7) from the turbine blade (61).

13. Turbine vane according to any one of claims 10 to 12, **characterized in that** the patrix profile (81) has shapes on at least one side of the turbine vane (6) that extend axially in the direction of the axial length of clamping and form a stepping in the length of clamping.

## Revendications

1. Dispositif adapté pour le serrage d'une aube de turbine (6), le dispositif étant formé par une unité de serrage (5) comprenant au moins deux éléments de bloc de serrage (31, 32) formant un bloc de serrage (3), qui entourent l'aube de turbine (6) avec une enveloppe de lame d'aube (7) qui est formée par une couche de matière plastique conservant au moins essentiellement ses dimensions sous contrainte de serrage, qui reçoit la lame d'aube (61) en complémentarité de forme au moins essentiellement sur sa longueur axiale et l'entoure au moins essentiellement à son pourtour de profile, et qui est séparable de la lame d'aube (61), la couche d'enveloppe en matière plastique présentant à une surface inférieure concave (611) et à une surface supérieure convexe (612) de la lame d'aube des surfaces dégagées vers l'extérieur, **caractérisé en ce que** les surfaces dégagées vers l'extérieur sont des surfaces de poinçon (8) dont chacune est définie par un profile de poinçon (81) structuré en trois dimensions et formant un relief et que les éléments de bloc de serrage (31, 32) présentent chacun sur un côté intérieur une surface de matrice (4) qui est définie par un profile de matrice (41) structuré en trois dimensions et formant un relief, les surfaces de poinçon (8) et les surfaces de matrices (4) étant conformées comme des surfaces correspondantes associées complémentaires réalisant une prise de référence et une prise de serrage.

2. Dispositif selon la revendication 1, **caractérisé en ce que** les deux profiles de matrice (41) présentent des formes structurées en trois dimensions qui assurent, en prise réciproque avec des formes complémentaires correspondantes des surfaces de poinçon (8) associées de la lame d'aube (61), un positionnement univoque en trois axes de l'aube de turbine (6).

3. Dispositif selon la revendication 1 ou 2, **caractérisé en ce que** les profiles de matrice (41) et les profiles de poinçon (81) présentent des gradins (42, 82) en forme d'escalier qui s'étendent dans la longueur axiale de serrage.

4. Dispositif selon la revendication 3, **caractérisé en ce que** des premières surfaces de gradins (421, 821) qui sont orientées au moins essentiellement perpendiculairement à la dimension (85) de la profondeur de la lame d'aube, sont formées comme surfaces de gradin parallèles.

5. Dispositif selon la revendication 3 ou 4, **caractérisé en ce que** les premières surfaces de gradins (421, 821) sont formées au moins partiellement avec une largeur de gradin (423, 823) variable selon la longueur axiale de gradin.

6. Dispositif selon l'une des revendications 1 à 5, **caractérisé en ce qu'**au moins une des surfaces de matrice (4) avec la surface de poinçon (8) correspondante présente des formes qui s'étendent axialement dans la direction de la longueur axiale de serrage et forment un étagement dans la longueur de serrage.

7. Dispositif selon l'une des revendications 1 à 6, **caractérisé en ce que** les surfaces de matrices (4) sont interrompues par au moins un évidement (311, 312, 321, 322) orienté transversalement à l'axe longitudinal des éléments de bloc de serrage (31, 32) associés, qui est formé mince par rapport à la longueur axiale de la surface de matrice (4) et forme une poche pour la répartition de charge et de pression.

8. Dispositif selon l'une des revendications 1 à 7, **caractérisé en ce que** les éléments de bloc de serrage (31, 32) avec leurs surfaces de matrice (4) sont formés comme des duplicata de forme de moules d'injection qui servent à réaliser l'enveloppe de lame d'aube (7) comme une pièce en matière plastique ajoutée à la lame d'aube (61) par injection.

9. Dispositif selon la revendication 8, **caractérisé en ce que** les surfaces de matrice (4) des duplicata de forme sont formées en fonction d'un coefficient de rétrécissement des surfaces de poinçon (8) injectées durcies par rapport aux dimensions des moules d'injection, avec des dimensions adaptées selon le rétrécissement.

10. Aube de turbine (6) adaptée pour être insérée dans un dispositif (1) selon l'une des revendications 1 à 9, la lame d'aube (61) étant entourée au moins essentiellement sur sa longueur axiale avec une enveloppe de lame d'aube (7) qui reçoit la lame d'aube (61) en complémentarité de forme au moins essentiellement sur sa longueur axiale et l'entoure au moins essentiellement à son pourtour de profile, et qui est séparable de la lame d'aube (61), l'enveloppe étant formée par une couche d'enveloppe en matière plastique conservant au moins essentiellement ses dimensions sous contrainte de serrage, la couche d'enveloppe présentant à une surface inférieure concave (611) et à une surface supérieure convexe (612) de la lame d'aube des surfaces de poinçon dégagées vers l'extérieur dont chacune est définie par un profile de poinçon (81) structuré en trois dimensions et formant un relief et qui s'étendent avec leurs surfaces entières sur le pourtour et la longueur axiale de l'enveloppe de lame d'aube (7) et sont formées pour réaliser une introduction de référence et de serrage dans des surfaces de matrice (4) associées complémentaires d'éléments de bloc de serrage (31, 32) dudit dispositif (1).

11. Aube de turbine selon la revendication 10, **caractérisé en ce que** l'enveloppe de lame d'aube (7) est une enveloppe en matière plastique thermoplastique ajoutée à la lame d'aube (61) par injection.

12. Dispositif selon la revendication 10 ou 11, **caractérisé en ce que** l'enveloppe de lame d'aube (7) est formée avec au moins une région d'affaiblissement qui constitue un endroit (71) destiné à la rupture pour rompre et détacher l'enveloppe de lame d'aube (7) de la lame d'aube (61).

13. Dispositif selon l'une des revendications 10 à 12, **caractérisé en ce que** le profile de poinçon (81) présente sur au moins un côté de la lame d'aube (6) des formes qui s'étendent axialement dans la direction de la longueur axiale de serrage et forment un étagement dans la longueur de serrage.
